# EUROPEAN PATENT APPLICATION

(11) **EP 4 730 442 A1**
(43) Date of publication of application: **22.04.2026**
(21) Application number: 25208741.6
(22) Date of filing: 15.10.2025
(51) Int. Cl.: H01M 4/62, H01M 4/525, H01M 4/131, C08L 15/00

(54) **POSITIVE ELECTRODES AND RECHARGEABLE LITHIUM BATTERIES INCLUDING THE SAME**

(30) Priority: 15.10.2024 KR 20240140555; 02.10.2025 KR 20250145593
(71) Applicant: SAMSUNG SDI CO., LTD., Yongin-si, Gyeonggi-do 17084 (KR)
(72) Inventor: YANG, Mihwa, Yongin-si, Gyeonggi-do 17084 (KR); KIM, Minjae, Yongin-si, Gyeonggi-do 17084 (KR); SEOL, Jongheon, Yongin-si, Gyeonggi-do 17084 (KR)
(74) Representative: Michalski Hüttermann & Partner Patentanwälte mbB

(57) **Abstract**

A positive electrode for a rechargeable lithium battery includes a positive electrode current collector and a positive electrode mixture layer on the positive electrode current collector, wherein the positive electrode mixture layer includes a positive electrode active material and a binder including a hydrogenated carboxylated nitrile butadiene rubber. The hydrogenated carboxylated nitrile butadiene rubber includes, based on a total weight of 100 wt% of the hydrogenated carboxylated nitrile butadiene rubber: about 20 wt% to about 40 wt% of a first structural unit derived from acrylonitrile; about 30 wt% to about 78 wt% of a second structural unit including a hydrogenated butadiene-derived structural unit and a butadiene-derived structural unit; about 2 wt% to about 10 wt% of a third structural unit derived from an acrylate; and about 0 wt% to about 20 wt% of a fourth structural unit derived from butene.

## Description

### BACKGROUND

### 1. Field

One or more embodiments of the present disclosure relate to positive electrodes and rechargeable lithium batteries including the same.

### 2. Description of the Related Art

Recently, with the rapid spread of electronic devices that use batteries, such as mobile phones, laptop computers, and electric vehicles, the demand for rechargeable batteries with high energy density and high capacity has been rapidly increasing. Accordingly, research and development to improve the performance of such rechargeable batteries, including rechargeable lithium batteries, has been actively pursued.

Rechargeable lithium batteries include a positive electrode and a negative electrode each including an active material capable of intercalating and deintercalating lithium ions, and an electrolyte solution, and generate electrical energy through oxidation and reduction reactions when lithium ions are intercalated and deintercalated into/from the positive electrode and the negative electrode. For example, the electrical energy is generated when lithium ions are intercalated into the positive electrode and/or deintercalated from the negative electrode during the discharge process.

Because the rechargeable lithium batteries are repeatedly charged and discharged during use, their performance may vary depending on the charge/discharge conditions. Therefore, efforts to enhance battery performance by enhancing (e.g., improving) charging methods are ongoing.

A positive electrode for a rechargeable lithium battery includes a positive electrode current collector and a positive electrode mixture layer formed thereon. The positive electrode mixture layer typically includes a positive electrode active material

(e.g., in a form of particles), and optionally may further include a positive electrode binder and/or a conductive material.

Polyvinylidene fluoride (PVDF)-based binders are widely used as positive electrode binders; however, they may also act as resistive components.

Accordingly, to enhance the adhesive strength of the positive electrode-particularly the adhesion between the positive electrode mixture layer and the current collector-while reducing resistance and extending the cycle life of the battery, it is desirable to reduce or minimize the utilization of PVDF-based binders or to replace them with alternative binders.

### SUMMARY

One or more aspects of embodiments of the present disclosure are directed toward a positive electrode that has excellent or suitable resistance characteristics and excellent or suitable mechanical strength.

One or more aspects of embodiments of the present disclosure are directed toward a rechargeable lithium battery that has excellent or suitable cycle-life characteristics by including the positive electrode.

Additional aspects will be set forth in part in the description which follows and, in part, will be apparent from the description, or may be learned by practice of the presented embodiments.

According to one or more embodiments of the present disclosure, a positive electrode includes a positive electrode current collector and a positive electrode mixture layer on the positive electrode current collector,

wherein the positive electrode mixture layer includes a positive electrode active material (e.g., in a form of particles) and a binder including a hydrogenated carboxylated nitrile butadiene rubber,

the hydrogenated carboxylated nitrile butadiene rubber includes, based on a total weight of 100 wt% of the hydrogenated carboxylated nitrile butadiene rubber: about 20 wt% to about 40 wt% of a first structural unit derived from acrylonitrile and represented by Chemical Formula 1; about 30 wt% to about 78 wt% of a second structural unit including a hydrogenated butadiene-derived structural unit represented by Chemical Formula 2A and a butadiene-derived structural unit represented by Chemical Formula 2B; about 2 wt% to about 10 wt% of a third structural unit represented by Chemical Formula 3; and about 0 wt% to about 20 wt% of a fourth structural unit represented by Chemical Formula 4,

the hydrogenated butadiene-derived structural unit represented by Chemical Formula 2A is included in an amount of greater than or equal to about 90 wt% and less than 100 wt% based on a total amount of 100 wt% of the second structural unit, and

the butadiene-derived structural unit represented by Chemical Formula 2B is included in an amount of greater than 0 wt% and less than or equal to about 10 wt% based on the total amount of 100 wt% of the second structural unit.

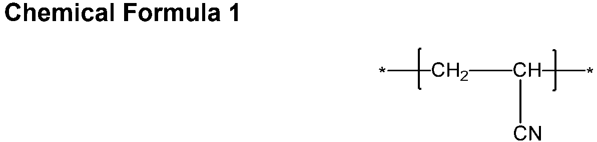

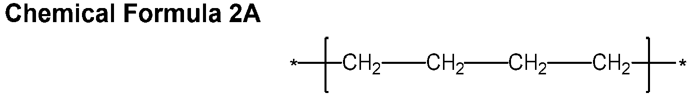

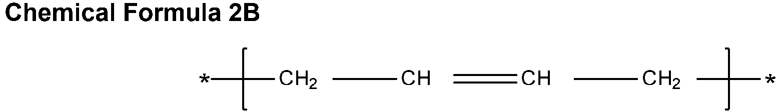

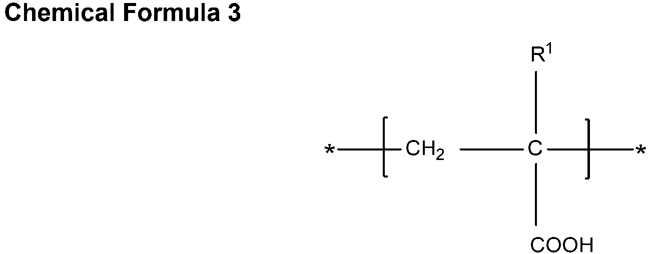

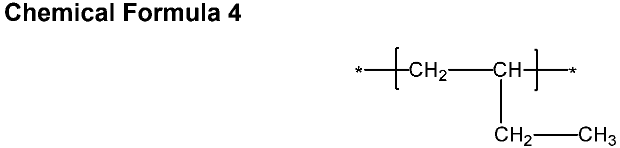

In Chemical Formula 3,
R¹ may be hydrogen, a substituted or unsubstituted C1 to C20 alkyl group, an ester group (-COOR, where R is a substituted or unsubstituted C1 to C20 alkyl group), a cyano group (-CN), a pyrrolidonyl group (-C₃H₅NHCO), a carboxyl group (-COOH), a caprolactamyl group (-NCOC₅H₁₀), a morpholinyl group (-NC₄H₈O), a hydroxyl group (-OH), an amino group (-NH₂), a vinyl group (-CH=CH₂), an epoxy group (-CHOCH₂), or a thiol group (-SH).

According to one or more embodiments of the present disclosure, a positive electrode composition includes a positive electrode active material (e.g., in a form of particles), a binder including a hydrogenated carboxylated nitrile butadiene rubber, and a solvent.
wherein the hydrogenated carboxylated nitrile butadiene rubber includes, based on a total weight of 100 wt% of the hydrogenated carboxylated nitrile butadiene rubber: about 20 wt% to about 40 wt% of a first structural unit derived from acrylonitrile and represented by Chemical Formula 1; about 30 wt% to about 78 wt% of a second structural unit including a hydrogenated butadiene-derived structural unit represented by Chemical Formula 2A and a butadiene-derived structural unit represented by Chemical Formula 2B; about 2 wt% to about 10 wt% of a third structural unit represented by Chemical Formula 3; and about 0 wt% to about 20 wt% of a fourth structural unit represented by Chemical Formula 4,
the hydrogenated butadiene-derived structural unit represented by Chemical Formula 2A is included in an amount of greater than or equal to about 90 wt% and less than 100 wt% based on a total amount of 100 wt% of the second structural unit, and
the butadiene-derived structural unit represented by Chemical Formula 2B is included in an amount of more than 0 wt% and less than or equal to 10 wt% based on the total amount of 100 wt% of the second structural unit.

The definitions for each chemical formula may each independently be the same as described above.

According to one or more embodiments of the present disclosure, a rechargeable lithium battery includes the positive electrode; a negative electrode including a negative electrode active material; and an electrolyte.

According to one or more embodiments, the positive electrode has the advantage of excellent or suitable resistance characteristics and excellent or suitable mechanical strength, and a rechargeable lithium battery including the positive electrode has the advantage of excellent or suitable cycle-life characteristics. For example, these desired properties may be attributed to the utilization of a hydrogenated carboxylated nitrile butadiene rubber (H-XNBR) binder, which enhances the resistance characteristics of the electrode mixture layer and improves adhesion to the current collector. The improved mechanical strength helps maintain electrode cohesion during repeated charge/discharge cycles, reducing the likelihood of delamination or cracking. Additionally, the reduced internal resistance contributes to more efficient electron and ion transport, thereby improving the overall electrochemical performance of the battery. As a result, the rechargeable lithium battery including the positive electrode described herein should have excellent or suitable cycle-life characteristics. The enhanced mechanical durability and electrical conductivity of the electrode contribute to stable capacity retention and reduced degradation over time.

### BRIEF DESCRIPTION OF THE DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings.

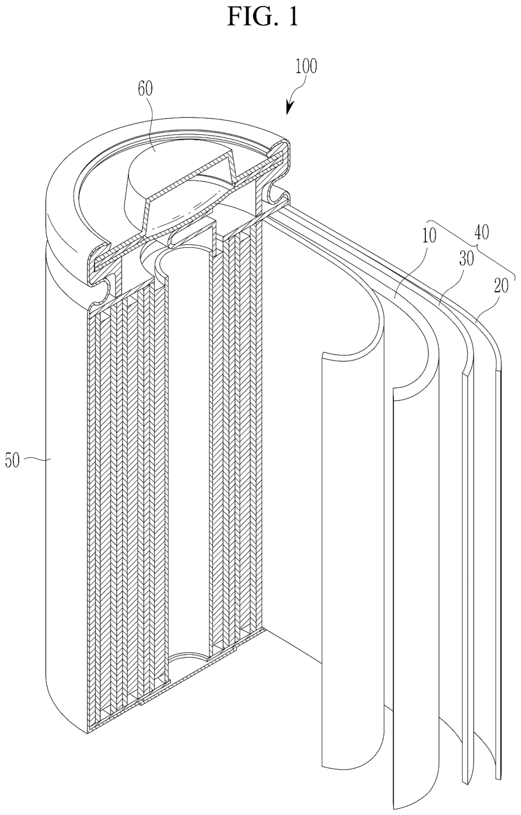

FIGS. 1 - 4 are each cross-sectional views schematically showing a rechargeable lithium battery according to one or more embodiments of the present disclosure.

### DETAILED DESCRIPTION

Hereinafter, one or more embodiments of the present disclosure will be described in more detail. However, these embodiments are presented as examples, and the present disclosure is not limited thereto, and the present disclosure is defined by the scope of the appended claims and equivalents thereof.

The terminology used herein is used to describe embodiments only, and is not intended to limit the present disclosure. The singular expression includes the plural expression unless the context clearly dictates otherwise. For example, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Here, it should be understood that terms such as "comprise(s)/comprising," "include(s)/including," or "has(have)/having" are intended to designate the presence of an embodied feature, number, step (e.g., act or task), element, or a combination thereof, but it does not preclude the possibility of the presence or addition of one or more other features, numbers, steps (e.g., acts or tasks), elements, or a combination thereof. Additionally, the terms "comprise(s)/comprising," "include(s)/including," "has/have/having", or other similar terms include or support the terms "consisting of" and "consisting essentially of," indicating the presence of stated features, numbers, steps, operations, elements, and/or components, without or essentially without the presence of other features, numbers, steps, operations, elements, components, and/or groups thereof.

In the drawings, the thickness of layers, films, panels, regions, and/or the like, may be exaggerated for clarity, and like reference numerals designate like elements throughout the disclosure, and duplicative descriptions thereof may not be provided for conciseness. It will be understood that if (e.g., when) an element such as a layer, film, region, or substrate is referred to as being "on" another element, it may be directly on the other element or one or more intervening elements may also be present therebetween. In contrast, if (e.g., when) an element is referred to as being "directly on" another element, there are no intervening elements present therebetween.

In addition, "layer" as used herein includes not only a shape formed on a whole surface if (e.g., when) viewed from a plan view, but also a shape formed on a partial surface (e.g., a portion of whole surface).

Unless otherwise specified in this disclosure, what is indicated in the singular may also include the plural. In addition, unless otherwise specified, "A and/or B" or "A or B" or "A/B" may refer to "including A, including B, or including A and B."

"Metal" is interpreted as a concept including one or more selected from among ordinary metals, transition metals, and metalloids (semi-metals).

As used herein, if (e.g., when) a definition is not otherwise provided, the particle diameter may be an average particle diameter. In addition, the particle diameter may refer to an average particle diameter (D50), which refers to the diameter of particles having a cumulative volume of 50 volume% in a particle size distribution. The average particle diameter (D50) may be measured by a method well suitable to those skilled in the art, for example, by a particle size analyzer, or by a transmission electron microscope, or a scanning electron microscope. In one or more embodiments, a dynamic light-scattering measurement device may be used to perform a data analysis, and the number of particles is counted for each particle size range. From the collected data, the average particle diameter (D50) value may be easily obtained through a calculation. In one or more embodiments, it may be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated, an average particle diameter (D50) on the basis of 50% of the particle diameter distribution in the measuring device may be calculated. In the present disclosure, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates a particle diameter or an average particle diameter, and when the particles are non-spherical, the "diameter" indicates a major axis length or an average major axis length.

As used herein, if (e.g., when) a specific definition is not otherwise provided, the term "alkyl group" may refer to a C1 to C20 alkyl group, the term "alkenyl group" may refer to a C2 to C20 alkenyl group, the term "cycloalkenyl group" may refer to a C3 to C20 cycloalkenyl group, the term "heterocycloalkenyl group" may refer to a C3 to C20 heterocycloalkenyl group, the term "aryl group" may refer to a C6 to C20 aryl group, the term "arylalkyl group" may refer to a C7 to C20 arylalkyl group, the term "alkylene group" may refer to a C1 to C20 alkylene group, the term "arylene group" may refer to a C6 to C20 arylene group, the term "alkylarylene group" may refer to a C7 to C20 alkylarylene group, the term "heteroarylene group" may refer to a C3 to C20 heteroarylene group, and the term "alkoxylene group" may refer to a C1 to C20 alkoxylene group.

As used herein, if (e.g., when) a specific definition is not otherwise provided, "substituted" refers to replacement of at least one hydrogen of a compound by a substituent selected from among a halogen (F, Cl, Br, or I), a hydroxyl group, a C1 to C20 alkoxy group, a nitro group, a cyano group, an amine group, an imino group, an azido group, an amidino group, a hydrazino group, a hydrazono group, a carbonyl group, a carbamoyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

As used herein, if (e.g., when) a specific definition is not otherwise provided, "hetero" refers to inclusion of at least one heteroatom selected from among N, O, S, and P, in the chemical formula.

As used herein, if (e.g., when) a specific definition is not otherwise provided, the term "combination" may refer to mixing or copolymerization.

In the chemical formula of the present disclosure, unless a specific definition is otherwise provided, hydrogen is bonded at the position if (e.g., when) a chemical bond is not drawn where supposed to be given.

In this disclosure, the weight average molecular weight (Mw) of a polymer or an oligomer may be a value measured using gel permeation chromatography (GPC).

In general, high-nickel positive electrode active materials are applied and used to implement high-capacity batteries, but the high-nickel positive electrode active materials have the problem that a large amount of residual lithium (LiOH, Li₂CO₃, or free Li, and/or the like) exists on the surface of the positive electrode active material.

The residual lithium and the polyvinylidene fluoride-based positive electrode binder may react, degenerating the binder within the positive electrode composition; as a result, the viscosity rapidly increases, causing the positive electrode composition (slurry) to gel, and making it difficult to coat the slurry on the current collector. In addition, if (e.g., when) manufacturing an electrode plate with a positive electrode composition including the above-mentioned modified and degenerated binder, there is a problem and issue in that the resistance of the electrode plate excessively (or substantially) increases.

### Positive Electrode

According to one or more embodiments of the present disclosure, a positive electrode for a rechargeable lithium battery may include a positive electrode current collector and a positive electrode mixture layer on the positive electrode current collector, wherein the positive electrode mixture layer includes a positive electrode active material (e.g., in a form of particles) and a binder including a hydrogenated carboxylated nitrile butadiene rubber.

The binder including the hydrogenated carboxylated nitrile butadiene rubber is capable of suppressing or reducing gelation of the positive electrode composition (slurry) while realizing an adhesive strength at an equivalent level or higher compared to a positive electrode binder of the polyvinylidene fluoride-based positive electrode binder.

In addition, the positive electrode including the hydrogenated carboxylated nitrile butadiene rubber as a binder has the advantage of having less change in electrode plate resistance when left for a long time period and superior mechanical properties such as flexibility of the electrode plate, compared to a positive electrode including the polyvinylidene fluoride-based binder.

Hereinafter, the positive electrode according to one or more embodiments will be described in more detail.

### Binder

In one or more embodiments, the positive electrode mixture layer includes a binder including a hydrogenated carboxylated nitrile butadiene rubber (H-XNBR).

In one or more embodiments, the hydrogenated carboxylated nitrile butadiene rubber may include: a first structural unit derived from acrylonitrile and represented by Chemical Formula 1; a second structural unit including a hydrogenated butadiene-derived structural unit represented by Chemical Formula 2A and a butadiene-derived structural unit represented by Chemical Formula 2B; a third structural unit represented by Chemical Formula 3; and a fourth structural unit represented by Chemical Formula 4.

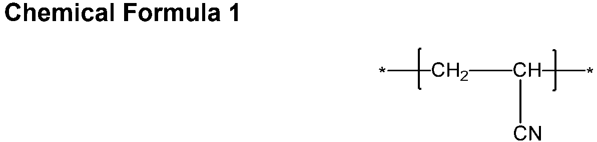

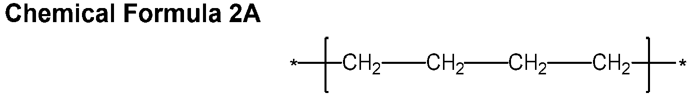

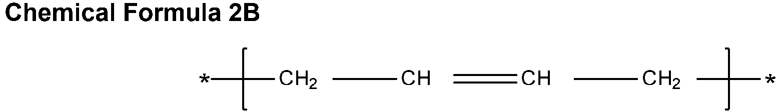

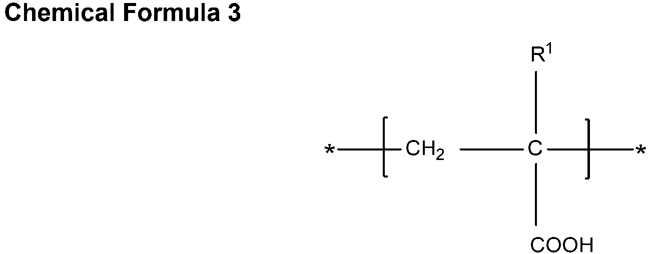

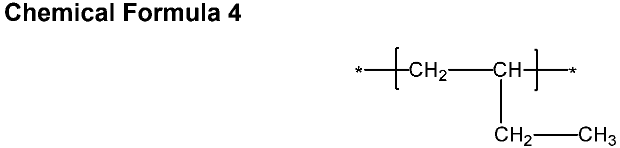

In Chemical Formula 3,
R¹ may be hydrogen, a substituted or unsubstituted C1 to C20 alkyl group, an ester group (-COOR, where R is a substituted or unsubstituted C1 to C20 alkyl group), a cyano group (-CN), a pyrrolidonyl group (-C₃H₅NHCO), a carboxyl group (-COOH), a caprolactamyl group (-NCOC₅H₁₀), a morpholinyl group (-NC₄H₈O), a hydroxyl group (-OH), an amino group (-NH₂), a vinyl group (-CH=CH₂), an epoxy group (-CHOCH₂), or a thiol group (-SH).

For example, in one or more embodiments, based on a total weight of 100 wt% of the hydrogenated carboxylated nitrile butadiene rubber, the first structural unit may be included in an amount of about 20 wt% to about 40 wt%, for example, about 25 wt% to about 40 wt%, about 30 wt% to about 40 wt%, or about 30 wt% to about 35 wt%. Based on the total weight of the hydrogenated carboxylated nitrile butadiene rubber, if the first structural unit is included in an amount of less than about 20 wt%, the electrolyte resistance may deteriorate, and if it is included in an amount of greater than about 40 wt%, the mechanical properties such as flexibility of the positive electrode may deteriorate.

For example, based on the total weight of 100 wt% of the hydrogenated carboxylated nitrile butadiene rubber, the second structural unit may be included in an amount of about 30 wt% to about 78 wt%, for example, about 30 wt% to about 70 wt%, about 40 wt% to about 70 wt%, about 50 wt% to about 70 wt%, or about 50 wt% to about 60 wt%. When the second structural unit is included in the above numerical range based on the total weight of 100 wt% of the hydrogenated carboxylated nitrile butadiene rubber, a conductive material such as carbon nanotubes (CNT) may be well dispersed within the electrode plate.

For example, based on the total weight of 100 wt% of the hydrogenated carboxylated nitrile butadiene rubber, the third structural unit may be included in an amount of about 2 wt% to about 10 wt%, for example, about 3 wt% to about 10 wt%, about 4 wt% to about 10 wt%, or about 4 wt% to about 8 wt%. Based on the total weight of 100 wt% of the hydrogenated carboxylated nitrile butadiene rubber, if the third structural unit is included in an amount of less than about 2 wt%, the adhesive strength of the binder may decrease, and if it is included in an amount of greater than about 10 wt%, the adhesive strength of the binder may increase excessively (or substantially), resulting in a problem in that the flexibility of the electrode plate decreases.

For example, based on the total weight of 100 wt% of the hydrogenated carboxylated nitrile butadiene rubber, the fourth structural unit may be included in an amount of about 0 wt% to about 20 wt%, for example, about 1 wt% to about 15 wt%, about 5 wt% to about 20 wt%, about 5 wt% to about 15 wt%, or about 5 wt% to about 10 wt%. Based on the total weight of 100 wt% of the hydrogenated carboxylated nitrile butadiene rubber, if the fourth structural unit is not included, the flexibility of the electrode plate may be reduced and the dispersibility of a conductive material such as CNT within the electrode plate may be reduced, and if it is included in an amount of greater than about 20 wt%, the adhesive strength of the binder may be reduced.

In one or more embodiments, the hydrogenated butadiene-derived structural unit represented by Chemical Formula 2A is included in an amount of greater than or equal to about 90 wt% and less than 100 wt% based on a total amount of 100 wt% of the second structural unit, and the butadiene-derived structural unit represented by Chemical Formula 2B is included in an amount of greater than 0 wt% and less than or equal to about 10 wt% based on the total amount of 100 wt% of the second structural unit.

If (e.g., when) the butadiene-derived structural unit represented by Chemical Formula 2B is not included in the second structural unit (i.e., 0 wt%), the pi-pi bond between the conductive material (CNT) and butadiene may be difficult, resulting in poor CNT dispersion within the electrode plate. If (e.g., when) it is included in an amount of greater than about 10 wt%, the solubility of the binder in a solvent (e.g., NMP) within the positive electrode composition may be poor, resulting in poor CNT wetting.

The binder including the hydrogenated carboxylated nitrile butadiene rubber may be included in an amount of greater than or equal to about 0.1 wt% and less than or equal to about 5 wt%, greater than or equal to about 0.3 wt% and less than or equal to about 3 wt%, greater than or equal to about 0.5 wt% and less than or equal to about 2 wt%, or greater than or equal to about 0.55 wt% and less than or equal to about 1.1 wt%, of a total amount (weight) of the positive electrode mixture layer.

The binder including the hydrogenated carboxylated nitrile butadiene rubber may have a weight average molecular weight (Mw) measured by the GPC method of about 50,000 g/mol to about 500,000 g/mol, for example, about 100,000 g/mol to about 500,000 g/mol, about 200,000 g/mol to about 500,000 g/mol, or about 200,000 g/mol to about 400,000 g/mol.

In one or more embodiments, the positive electrode mixture layer may optionally further include one or more other binders.

For example, the other binders may include polyvinylidene fluoride, a derivative thereof, a copolymer including it, or a combination thereof, or may include an acrylic binder, a derivative thereof, a copolymer including it, or a combination thereof. For example, the other binders may include one or more selected from among polyvinylidene fluoride (PVdF), a PVDF-HFP (Hexafluoropropylene) copolymer, a PVDF-TrFE (trifluoroethylene) copolymer, a PVDF-CTFE (chlorotrifluoroethylene) copolymer, poly(meth)acrylic acid, poly(meth)acrylate, polymethyl(meth)acrylate, polyacrylonitrile, an acrylonitrile-styrene-butadiene copolymer, and/or combinations thereof.

It is desirable to completely replace the other binders with a binder including the hydrogenated carboxylated nitrile butadiene rubber, but the other binder may be mixed and used to secure adhesion, compatibility, and/or the like.

The other binders may have a weight average molecular weight (Mw) measured by the GPC method of about 500,000 g/mol to about 5,000,000 g/mol, about 500,000 g/mol to about 3,000,000 g/mol, or about 500,000 g/mol to about 1,500,000 g/mol.

The other binders may be included in an amount of greater than about 0 wt% and less than or equal to about 3 wt%, greater than about 0 wt% and less than or equal to about 2 wt%, greater than about 0 wt% and less than or equal to about 1 wt%, or greater than about 0 wt% and less than or equal to about 0.1 wt%, based on the total amount of 100 wt% of the positive electrode mixture layer.

### Positive Electrode Active Material

As the positive electrode active material, a compound capable of intercalating and deintercalating lithium (lithiated intercalation compound) may be used. For example, in one or more embodiments, at least one composite oxide of lithium and a metal selected from among cobalt, manganese, nickel, aluminum, and a combination thereof may be used.

The composite oxide may be a lithium transition metal composite oxide, and non-limiting examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

In one or more embodiments, a compound represented by any one selected from among the following chemical formulas may be used: LiₐA_{1-b}X_{b}O_{2-c}D_{c} (0.90≤a≤1.8, 0≤b≤0.5, 0≤c≤0.05); LiₐMn₂₋₆X_{b}O_{4-c}D_{c} (0.90≤a≤1.8, 0≤b≤0.5, 0≤c≤0.05); LiₐNi1-b-_{c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the foregoing chemical formulas, A may be nickel (Ni), cobalt (Co), manganese (Mn), or a combination thereof; X may be aluminum (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; G may be Al, Cr, Mn, Fe, Mg, lanthanum (La), cerium (Ce), Sr, V, or a combination thereof; and L¹ may be Mn, Al, or a combination thereof.

For example, in one or more embodiments, the positive electrode active material may be a high nickel-based positive electrode active material in which the nickel content (e.g., amount) is greater than or equal to about 80 mol%, greater than or equal to about 85 mol%, greater than or equal to about 88 mol%, greater than or equal to about 90 mol%, greater than or equal to about 91 mol%, or greater than or equal to about 94 mol%, and less than or equal to about 99 mol%, based on 100 mol% of a total metal excluding lithium in a lithium transition metal composite oxide. The high-nickel positive electrode active material may achieve high capacity and may be applied to high-capacity, high-density rechargeable lithium batteries.

The high-nickel positive electrode active material has a high content (e.g., amount) of residual lithium on the surface of positive electrode active material particles, and the residual lithium reacts with PVdF, which is generally used as a positive electrode binder, to cause gelation of the positive electrode slurry. Accordingly, the slurry viscosity increases during the production of the electrode plate, which may cause a loading level deviation during the coating process and lead to coating defects.

The binder according to one or more embodiments is not reactive with residual lithium on the surface of a high-nickel positive electrode active material, thereby preventing or reducing gelation of the positive electrode slurry. Accordingly, the viscosity of the positive electrode composition (slurry) may be maintained at an appropriate or suitable level to improve the processability, lower the resistance of the positive electrode, and improve the physical properties of the positive electrode, such as the bending strength.

For example, in one or more embodiments, the positive electrode active material may include a lithium nickel-based composite oxide, and may include, for example, a compound represented by Chemical Formula 5.

Chemical Formula 5 **Liₐ₁Niₓ₁M¹_{y1}M²_{z1}O_{2-b1}X_{b1}**

In Chemical Formula 5, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are different elements and may each independently be at least one element selected from among Al, B, Ba, Ca, Ce, Co, Cr, Cu, Fe, Mg, Mn, Mo, Nb, Si, Sn, Sr, Ti, V, W, Zn, and Zr, and X may be at least one element selected from among F, P, and S.

In one or more embodiments, in Chemical Formula 5, 0.6≤x1≤1, 0≤y1≤0.4, and 0≤z1≤0.4; or 0.8≤x1≤1, 0≤y1≤0.2, and 0≤z1≤0.2; 0.9≤x1<1, 0<y1≤0.1, and 0≤z1≤0.1.

In one or more embodiments, the positive electrode active material may include, for example, a lithium nickel-cobalt-based composite oxide represented by Chemical Formula 6.

Chemical Formula 6 **Liₐ₂Niₓ₂Co_{y2}M³_{z2}O_{2-b2}X_{b2}**

In Chemical Formula 6, 0.9≤a2≤1.8, 0.3≤x2<1, 0<y2≤0.7, 0≤z2≤0.7, 0.9≤x2+y2+z2≤1.1, and 0≤b2≤0.1, M³ may be one or more elements selected from among Al, B, Ba, Ca, Ce, Cr, Cu, Fe, Mg, Mn, Mo, Nb, Si, Sn, Sr, Ti, V, W, Y, Zn, and Zr, and X is one or more elements selected from among F, P, and S.

In one or more embodiments, in Chemical Formula 6, for example 0.7≤x2<1, 0<y2≤0.3, and 0≤z2≤0.3; 0.8≤x2<1, 0<y2≤0.2, and 0≤z2≤0.2; 0.9≤x2<1, 0<y2≤0.1, and 0≤z2≤0.1.

In one or more embodiments, the positive electrode active material may include, for example, a lithium nickel-cobalt-manganese-based composite oxide, a lithium nickel-cobalt-aluminum-based composite oxide, or a lithium nickel-cobalt-aluminum-manganese-based composite oxide represented by Chemical Formula 7.

**Chemical Formula 7** **Liₐ₃Niₓ₃Co_{y3}M³_{z3}M⁴_{w3}O_{2-b3}X_{b3}**

In Chemical Formula 7, 0.9≤a3≤1.8, 0.3≤x3≤0.98, 0.01≤y3≤0.69, 0.01≤z3≤0.69, 0≤w3≤0.69, 0.9≤x3+y3+z3+w3≤1.1, and 0≤b3≤0.1, M³ may be Al, Mn, or a combination thereof, M⁴ may be one or more elements selected from among B, Ba, Ca, Ce, Cr, Cu, Fe, Mg, Mo, Nb, Si, Sn, Sr, Ti, V, W, Y, Zn, and Zr, and X may be one or more elements selected from among F, P, and S.

In one or more embodiments, the positive electrode active material may be in the form of secondary particles in which a plurality of primary particles is agglomerated, each primary particle being in the form of a single particle, or may include both (e.g., simultaneously) secondary particles and single particles.

An average particle diameter (D₅₀) of the positive electrode active material may be about 1 micrometer (µm) to about 25 µm, for example, about 1 µm to about 20 µm, or about 3 µm to about 18 µm. The positive electrode active material may be large particles having an average particle diameter (D₅₀) of about 10 µm to about 25 µm, or small particles having an average particle diameter (D₅₀) of about 1 µm to about 8 µm, or may include both (e.g., simultaneously) large and small particles. Here, the average particle diameter (D₅₀) may be obtained by selecting about 20 random particles from a scanning electron microscope image of the positive electrode active material, measuring their particle diameters (diameter, major axis, or major axis length), and then obtaining a particle size distribution, and then taking the size of particles having a cumulative volume of 50 volume% from the particle size distribution as the average particle diameter.

An amount of the positive electrode active material may be about 90 wt% to about 99.5 wt% based on a total weight of 100 wt% of the positive electrode mixture layer.

### Conductive Material

In one or more embodiments, the positive electrode mixture layer may further include a conductive material (e.g., electron conductor).

The conductive material is used to impart conductivity (e.g., electrical conductivity) to the positive electrode, and any material that does not cause undesired chemical change and conducts electrons may be used in the rechargeable lithium battery. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including one or more of copper, nickel, aluminum, silver, and/or the like; a conductive polymer such as a polyphenylene derivative; and/or a mixture thereof.

The conductive material may be included in an amount of greater than or equal to about 0.1 wt% and less than or equal to about 5 wt%, greater than or equal to about 0.5 wt% and less than or equal to about 3 wt%, or greater than or equal to about 1 wt% and less than or equal to about 2 wt%, of the total amount (weight) of the positive electrode mixture layer.

For example, in one or more embodiments, based on the total weight of 100 wt% of the positive electrode active material, the binder including the hydrogenated carboxylated nitrile butadiene rubber, and the conductive material, the binder may be included in an amount of about 0.1 wt% to about 2 wt%.

For example, based on the total weight of 100 wt% of the positive electrode active material, the binder including the hydrogenated carboxylated nitrile butadiene rubber, and the conductive material, the positive electrode active material may be included in an amount of about 97 wt% to about 99.8 wt%.

For example, based on the total weight of 100 wt% of the positive electrode active material, the binder including the hydrogenated carboxylated nitrile butadiene rubber, and the conductive material, the conductive material may be included in an amount of about 0.1 wt% to about 1 wt%.

When the above numerical ranges are satisfied, a positive electrode having excellent or suitable mechanical properties of the electrode plate may be realized while effectively suppressing or reducing gelation of the positive electrode composition.

### Crosslinking Agent

In one or more embodiments, the positive electrode mixture layer may further include a crosslinking agent in addition to the binder in order to attach the positive electrode active material particles well to each other and also to attach the positive electrode active material well to the positive electrode current collector.

In one or more embodiments, the crosslinking agent may be a carbodiimide compound-based crosslinking agent.

For example, the crosslinking agent may be represented by Chemical Formula 12:

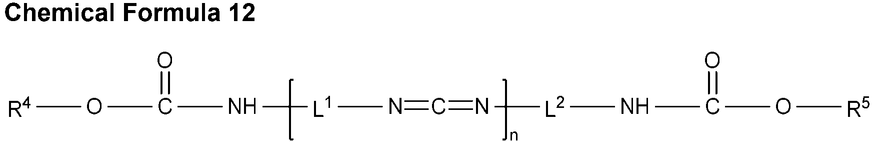

In Chemical Formula 12,
R⁴ and R⁵ may each independently be a substituted or unsubstituted C1 to C20 alkyl group, a substituted or unsubstituted C3 to C20 cycloalkyl group, a substituted or unsubstituted C6 to C20 aryl group, or a substituted or unsubstituted C2 to C20 heteroaryl group including at least one selected from among N, O, S, and P;
L¹ and L² may each independently be a substituted or unsubstituted C1 to C20 alkylene group, a substituted or unsubstituted C3 to C20 cycloalkylene group, a substituted or unsubstituted C6 to C20 arylene group, or a substituted or unsubstituted C2 to C20 heteroarylene group including at least one selected from among N, O, S, and P; and
n is an integer from 1 to 20.

In one or more embodiments, the crosslinking agent may include one or more compounds selected from among compounds in Group 1.

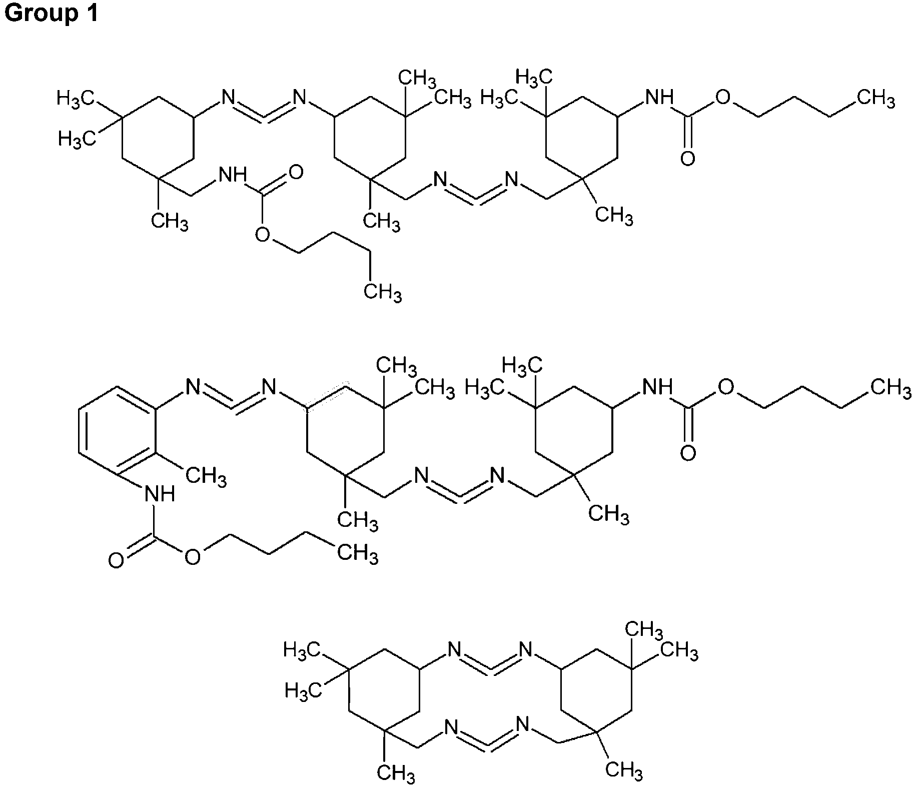

The crosslinking agent may be included in an amount of greater than about 0 wt% and less than or equal to about 3 wt%, greater than about 0 wt% and less than or equal to about 2 wt%, greater than about 0 wt% and less than or equal to about 1 wt%, or greater than about 0 wt% and less than or equal to about 0.1 wt%, of the total amount (weight) of the positive electrode mixture layer.

In one or more embodiments, the positive electrode current collector may use Al, but embodiments of the present disclosure are not limited thereto.

### Positive Electrode Composition

According to one or more embodiments, a positive electrode composition may include a positive electrode active material (e.g., in a form of particles), a binder including a hydrogenated carboxylated nitrile butadiene rubber, and a solvent. In one or more embodiments, the positive electrode composition may be present in the form of positive electrode slurry.

The positive electrode active material and the binder including a hydrogenated carboxylated nitrile butadiene rubber are all the same as described above.

For example, the hydrogenated carboxylated nitrile butadiene rubber includes, based on a total weight of 100 wt% of the hydrogenated carboxylated nitrile butadiene rubber: about 20 wt% to about 40 wt% of a first structural unit derived from acrylonitrile and represented by Chemical Formula 1; about 30 wt% to about 78 wt% of a second structural unit including a hydrogenated butadiene-derived structural unit represented by Chemical Formula 2A and a butadiene-derived structural unit represented by Chemical Formula 2B; about 2 wt% to about 10 wt% of a third structural unit represented by Chemical Formula 3; and about 0 wt% to about 20 wt% of a fourth structural unit represented by Chemical Formula 4.

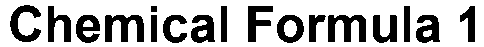

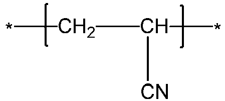

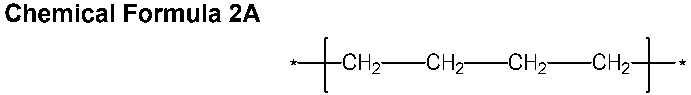

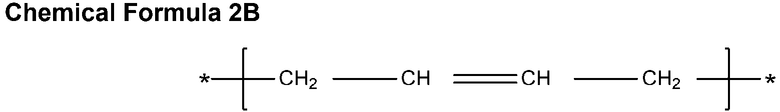

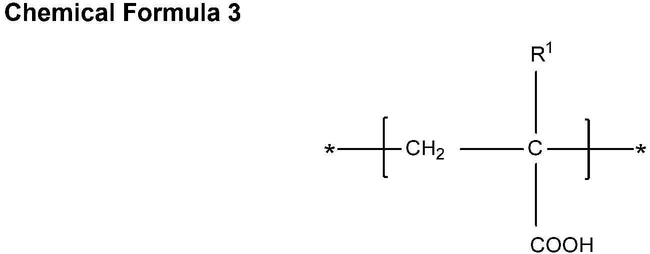

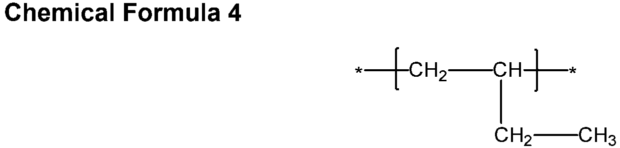

In Chemical Formula 3,
R¹ may be hydrogen, a substituted or unsubstituted C1 to C20 alkyl group, an ester group (-COOR, where R is a substituted or unsubstituted C1 to C20 alkyl group), a cyano group (-CN), a pyrrolidonyl group (-C₃H₅NHCO), a carboxyl group (-COOH), a caprolactamyl group (-NCOC₅H₁₀), a morpholinyl group (-NC₄H₈O), a hydroxyl group (-OH), an amino group (-NH₂), a vinyl group (-CH=CH₂), an epoxy group (-CHOCH₂), or a thiol group (-SH).

The hydrogenated butadiene-derived structural unit represented by Chemical Formula 2A is included in an amount of greater than or equal to about 90 wt% and less than 100 wt% based on a total amount of 100 wt% of the second structural unit, and the butadiene-derived structural unit represented by Chemical Formula 2B is included in an amount of greater than 0 wt% and less than or equal to about 10 wt% based on the total amount of 100 wt% of the second structural unit.

The binder including the hydrogenated carboxylated nitrile butadiene rubber may have a weight average molecular weight (Mw) measured by the GPC method of about 50,000 g/mol to about 500,000 g/mol, for example, about 100,000 g/mol to about 500,000 g/mol, about 200,000 g/mol to about 500,000 g/mol, or about 200,000 g/mol to about 400,000 g/mol.

In one or more embodiments, any solvent that does not cause a side reaction with the positive electrode active material and binder may be used and included in the positive electrode composition without limitation, and an example thereof may include N-methyl-2-pyrrolidone (NMP).

In one or more embodiments, the positive electrode composition may optionally further include one or more other binders.

For example, the other binders may include polyvinylidene fluoride, a derivative thereof, a copolymer including the same, or a combination thereof, or may include an acrylic binder, a derivative thereof, a copolymer including the same, or a combination thereof. For example, the other binders may include one or more selected from among polyvinylidene fluoride (PVdF), a PVDF-HFP (hexafluoropropylene) copolymer, a PVDF-TrFE (trifluoroethylene) copolymer, a PVDF-CTFE (chlorotrifluoroethylene) copolymer, poly(meth)acrylic acid, poly(meth)acrylate, polymethyl(meth)acrylate, polyacrylonitrile, an acrylonitrile-styrene-butadiene copolymer, and/or combinations thereof.

The other binders may have a weight average molecular weight (Mw) measured by the GPC method of about 500,000 g/mol to about 5,000,000 g/mol, about 500,000 g/mol to about 3,000,000 g/mol, or about 500,000 g/mol to about 1,500,000 g/mol.

In one or more embodiments, the positive electrode composition may further include a conductive material (e.g., an electrically conductive material).

The conductive material is used to impart conductivity to the electrode, and any material that does not cause undesired chemical change and conducts electrons may be used in the composition. Non-limiting examples of the conductive material may include a carbon-based material such as natural graphite, artificial graphite, carbon black, acetylene black, Ketjen black, a carbon fiber, a carbon nanofiber, and carbon nanotube; a metal-based material including one or more of copper, nickel, aluminum, silver, and/or the like, in a form of a metal powder or a metal fiber; a conductive polymer such as a polyphenylene derivative; and/or a mixture thereof.

For example, in one or more embodiments, based on a total weight of 100 wt% of the positive electrode active material, the binder including the hydrogenated carboxylated nitrile butadiene rubber, and the conductive material, the binder may be included in an amount of about 0.1 wt% to about 2 wt%.

For example, based on the total weight of 100 wt% of the positive electrode active material, the binder including the hydrogenated carboxylated nitrile butadiene rubber, and the conductive material, the positive electrode active material may be included in an amount of about 97 wt% to about 99.8 wt%.

For example, based on the total weight of 100 wt% of the positive electrode active material, the binder including the hydrogenated carboxylated nitrile butadiene rubber, and the conductive material, the conductive material may be included in an amount of about 0.1 wt% to about 1 wt%.

When the above numerical ranges are satisfied, a positive electrode having excellent or suitable mechanical properties of the electrode plate can be realized while effectively suppressing or reducing gelation of the positive electrode composition.

In one or more embodiments, the positive electrode composition may further include a crosslinking agent, wherein the crosslinking agent is the same as described above.

For example, the positive electrode composition may further include a lithium-containing compound present on the surface of the positive electrode active material (e.g., on the surface of the positive electrode active material particles), and the lithium-containing compound may include LiOH, Li₂CO₃, free Li, or a combination thereof.

In the positive electrode composition, the LiOH may be included in an amount of greater than or equal to about 0.002 wt%, greater than or equal to about 0.01 wt%, or greater than or equal to about 0.1 wt%, and may be included in an amount of less than or equal to about 1.0 wt%, less than or equal to about 0.6 wt%, or less than or equal to about 0.58 wt%, based on a total weight of 100 wt% of the positive electrode active material.

Based on the total weight of 100 wt% of the positive electrode active material, the Li₂CO₃ may be included in an amount of greater than or equal to about 0.004 wt%, greater than or equal to about 0.01 wt%, or greater than or equal to about 0.1 wt%, and may be included in an amount of less than or equal to about 0.4 wt%, or less than or equal to about 0.36 wt%.

Based on the total weight of 100 wt% of the positive electrode active material, the free Li may be included in an amount of greater than or equal to about 0.002 wt%, greater than or equal to about 0.01 wt%, or greater than or equal to about 0.07 wt%, and may be included in an amount of less than or equal to about 0.3 wt%, or less than or equal to about 0.24 wt%.

An amount of the lithium-containing compound for the positive electrode active material may vary depending on the type (kind) of the positive electrode active material, and for example, the above numerical ranges may be the amounts of the lithium-containing compounds if (e.g., when) a high-nickel positive electrode active material is used.

When the above-described positive electrode active material is a high-nickel positive electrode active material in which the nickel content (e.g., amount) is greater than or equal to about 80 mol% based on 100 mol% of a total metal excluding lithium in a lithium transition metal composite oxide, the lithium-containing compound (hereinafter, may be referred to as residual lithium) may be present in a large amount on the surface of the positive electrode active material (e.g., on the surface of the positive electrode active material particles). These lithium-containing compounds may have a negative effect on the electrochemical characteristics, thermal safety, and cycle-life characteristics of the battery, and methods such as washing the surface of the positive electrode active material have been being used to remove or reduce the lithium-containing compounds.

For example, if (e.g., when) the lithium-containing compound is mixed with a polyvinylidene fluoride-based binder such as PVdF, there has been a problem that the viscosity of the positive electrode composition rapidly increases, and gelation occurs.

The positive electrode composition according to one or more embodiments includes a binder including the hydrogenated carboxylated nitrile butadiene rubber, and the binder can effectively prevent or reduce the viscosity of the positive electrode composition from rapidly increasing even if (e.g., when) mixed with a high-nickel positive electrode active material.

### Rechargeable Lithium Battery

According to one or more embodiments of the present disclosure, a rechargeable lithium battery includes the positive electrode; a negative electrode including a negative electrode active material; and an electrolyte, wherein the rechargeable lithium battery has improved battery cycle-life characteristics, and/or the like by including the afore-described positive electrode.

The electrolyte may be an electrolyte solution in liquid form, or a solid electrolyte in solid form.

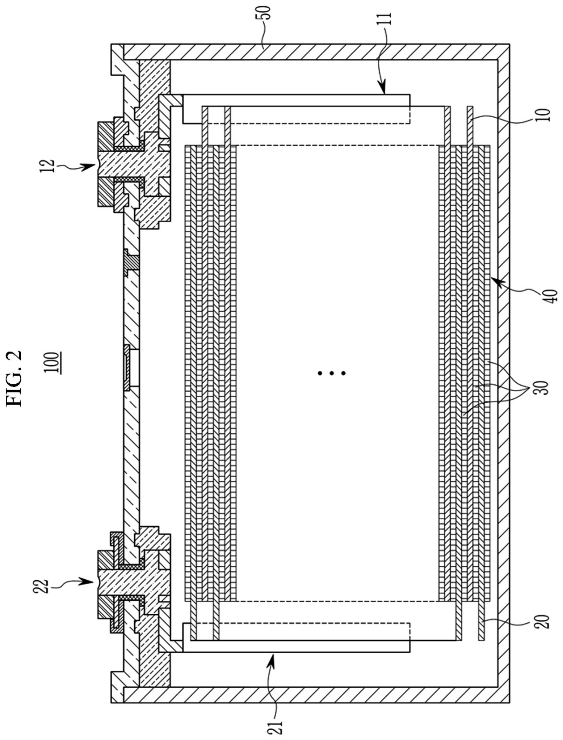

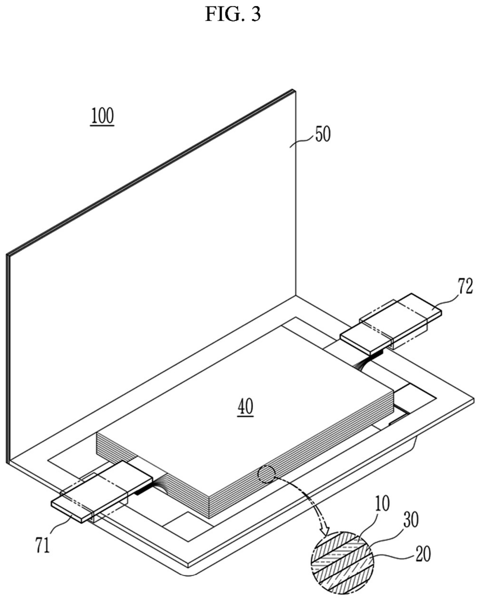

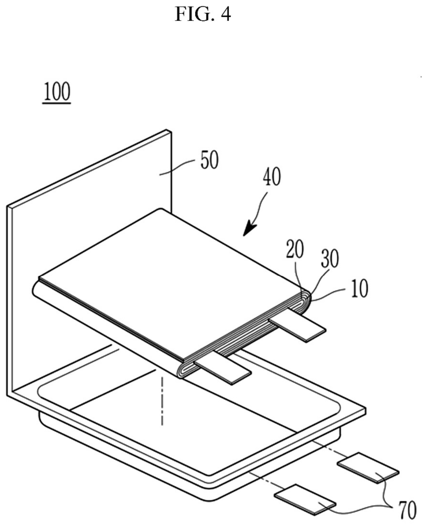

The rechargeable lithium battery may be classified into a cylindrical type, a prismatic type, a pouch type, a coin type, and/or the like depending on its shape. FIGS. 1 to 4 are each a schematic view illustrating a rechargeable lithium battery according to one or more embodiments of the present disclosure. FIG. 1 shows a cylindrical battery, FIG. 2 shows a prismatic battery, and FIGS. 3 and 4 each show a pouch-type (kind) battery. Referring to FIGS. 1 to 4, the rechargeable lithium battery 100 may include an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution. In one or more embodiments, the rechargeable lithium battery 100 may include a sealing member 60 that seals the case 50 as shown in FIG. 1. In one or more embodiments, in FIG. 2, the rechargeable lithium battery 100 may include a positive electrode lead tab 11, a positive electrode terminal 12, a negative electrode lead tab 21, and a negative electrode terminal 22. In one or more embodiments, as shown in FIG. 3 and FIG. 4, the rechargeable lithium battery 100 includes an electrode tab 70, that is, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electrical devices, but embodiments of the present disclosure are not limited thereto.

Hereinafter, the components constituting the rechargeable lithium battery other than the positive electrode will be described in more detail.

### Negative Electrode Active Material

The negative electrode active material included in the negative electrode may include a material that reversibly intercalates/deintercalates lithium ions, a lithium metal, a lithium metal alloy, a material capable of doping/dedoping lithium, and/or a transition metal oxide.

The material capable of reversibly intercalating/deintercalating lithium ions may be a carbon-based negative electrode active material, and for example, may be crystalline carbon, amorphous carbon, or a combination thereof. The crystalline carbon may be graphite such as non-shaped, sheet-shaped, flake-shaped, sphere-shaped, or fiber-shaped natural graphite and/or artificial graphite, and the amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnOₓ (0 < x ≤ 2) (e.g., SnO₂), a Sn-based alloy, or a combination thereof.

The silicon-carbon composite may be a composite of silicon and amorphous carbon, in a form of particles. According to one or more embodiments, the silicon-carbon composite may be in a form of silicon particles and amorphous carbon coated on the surface of each of the silicon particles. For example, in one or more embodiments, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on a surface of the core.

In one or more embodiments, the Si-based negative electrode active material or the Sn-based negative electrode active material may be used in combination with a carbon-based negative electrode active material.

### Negative Electrode

The negative electrode for a rechargeable lithium battery may include a negative electrode current collector and a negative electrode active material layer on the negative electrode current collector. The negative electrode active material layer includes a negative electrode active material (e.g., in a form of particles) and may further include a binder and/or a conductive material (e.g., electron conductor).

For example, the negative electrode active material layer may include about 90 to about 99 wt% of the negative electrode active material, about 0.5 to about 5 wt% of the binder, and about 0 to about 5 wt% of the conductive material, based on a total weight of 100 wt% of the negative electrode active material layer.

The binder serves to well attach the negative electrode active material particles to each other and also to well attach the negative electrode active material to the negative electrode current collector. The binder may include a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, and for example, may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode, and any material that does not cause undesired chemical change and conducts electrons can be used in the battery. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including one or more of copper, nickel, aluminum silver, and/or the like; a conductive polymer such as a polyphenylene derivative; and/or a mixture thereof.

The negative electrode current collector may be selected from among copper foil, nickel foil, stainless steel foil, titanium foil, nickel foam, copper foam, a polymer substrate coated with a conductive metal, and a combination thereof.

### Electrolyte Solution

The electrolyte solution for a rechargeable lithium battery may include a non-aqueous organic solvent and a lithium salt.

The non-aqueous organic solvent serves as a medium for transmitting ions that take part in the electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may be dimethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds) thereof.

In one or more embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. For example, the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are each an integer of 1 to 20), lithium trifluoromethane sulfonate, lithium tetrafluoroethanesulfonate, lithium difluorobis(oxalato)phosphate (LiDFOP), and lithium bis(oxalato) borate (LiBOB).

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on a surface (e.g., one or both (e.g., simultaneously) surfaces (e.g., opposite surfaces)) of the porous substrate.

The porous substrate may be a polymer film formed of any one selected from among polyolefins such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{®}), or a copolymer or a mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto.

The organic material and the inorganic material may be mixed in one coating layer, or a coating layer including an organic material and a coating layer including an inorganic material may be stacked.

Examples and comparative examples of the present disclosure will be described in more detail below. However, the following examples are merely examples of the present disclosure, and the present disclosure is not limited to the following examples.

### Examples

### Example 1

### (1) Preparation of Binder

A hydrogenated carboxylated nitrile butadiene rubber binder (hereinafter, sometimes referred to as H-XNBR) was prepared, which included 33 wt% of a first structural unit represented by Chemical Formula 1, 57 wt% of a second structural unit including a compound represented by Chemical Formula 2A and a compound represented by Chemical Formula 2B, 5 wt% of a third structural unit represented by Chemical Formula 3, and 5 wt% of a fourth structural unit represented by Chemical Formula 4. In Chemical Formula 3, R¹ was a methyl group (-CH₃).

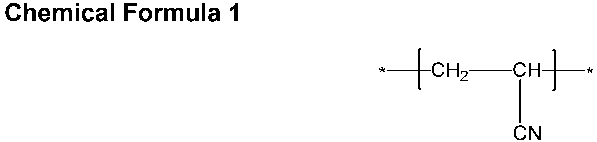

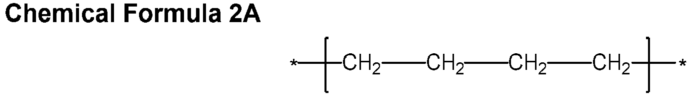

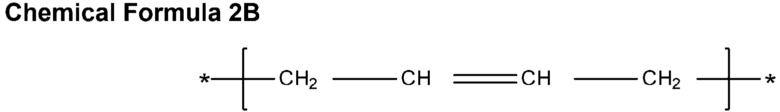

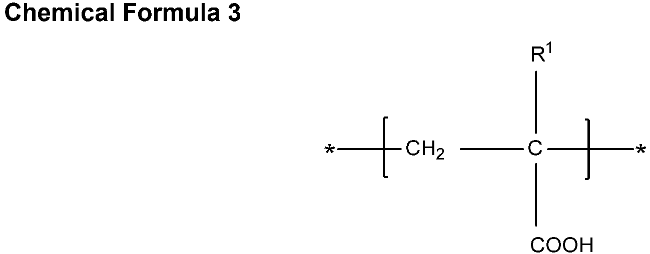

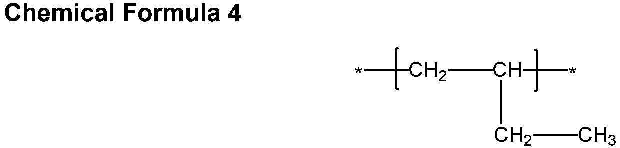

Herein, based on the total amount of 100 wt% of the second structural unit, the compound represented by Chemical Formula 2A was included at 95 wt%, and the compound represented by Chemical Formula 2B was included at 5 wt%.

The H-XNBR according to Example 1 had a weight average molecular weight of 300,000 g/mol.

### (2) Manufacturing of Positive Electrode

A positive electrode active material, a conductive material, and a binder were dispersed in N-methyl-2-pyrrolidone according to a composition shown in Table 1, preparing a positive electrode slurry (a positive electrode composition).

Herein, a content (e.g., amount) of a lithium-containing compound existing on the surface of the positive electrode active material was measured in an HCl titration method and is also shown in Table 1.

For example, 10 g of the positive electrode active material was added to 100 mL of distilled water and then, stirred at 300 rpm for 30 minutes. When the stirring was completed, after settling the positive electrode active material, a supernatant was filtered under a reduced pressure and taken by 40 mL, which was added to 100 mL of distilled water and then, titrated with 1 N HCl.

Because the lithium-containing compound, which was unreacted residual lithium on the surface of the positive electrode active material, was present in the form of Li₂CO₃, LiOH, free Li, and/or the like, the titration occurred through a reaction of CO₃²⁻, OH⁻ ions, and/or the like with H⁺ of HCl. An amount of the injected HCl solution was used to calculate a content (e.g., amount) of the unreacted residual lithium.

The positive electrode slurry was coated on a 12 µm-thick aluminum foil and then, dried and compressed to manufacture a positive electrode including a positive electrode mixture layer.

### Examples 2 to 4 and Comparative Examples 1 to 2

A positive electrode composition and a positive electrode were manufactured in substantially the same manner as in Example 1 except that the contents (e.g., amounts) of the positive electrode active material, the conductive material, and the binder were adjusted as shown in Table 1.

### Examples 5 to 6 and Comparative Example 3

A positive electrode composition and a positive electrode were manufactured in substantially the same manner as in Example 1 except that the type (kind) of the positive electrode active material was changed to LiCoO₂ (LCO), and the contents (e.g., amounts) of the positive electrode active material, the conductive material, and the binder were adjusted as shown in Table 1.

**Table 1**

| | (A) Positive electrode active material (wt%) | | (B) Cond uctive mater ial (wt%) | (C) Binder (wt%) | | Lithium-containing compound (wt% based on total weight of 100 wt% of positive electrode active material) | | |
|---|---|---|---|---|---|---|---|---|
| | NCA | LCO | CNT | PVdF | H-XNBR | LiOH | Li₂CO₃ | Free Li |
| Example 1 | 98.5 | 0 | 0.4 | 0 | 1.1 | 0.58 | 0.36 | 0.236 |
| Example 2 | 99 | 0 | 0.4 | 0 | 0.6 | | | |
| Example 3 | 98.5 | 0 | 0.4 | 0 | 1.1 | 0.178 | 0.134 | 0.077 |
| Example 4 | 99 | 0 | 0.4 | 0 | 0.6 | | | |
| Comparative Example 1 | 98.5 | 0 | 0.4 | 1.1 | 0 | 0.58 | 0.36 | 0.236 |
| Comparative Example 2 | 98.5 | 0 | 0.4 | 1.1 | 0 | 0.178 | 0.134 | 0.077 |
| Example 5 | 0 | 98.5 | 0.4 | 0 | 1.1 | 0.0028 | 0.0043 | 0.0022 |
| Example 6 | 0 | 99 | 0.4 | 0 | 0.6 | 0.0028 | 0.0043 | 0.0022 |
| Comparative Example 3 | 0 | 98.5 | 0.4 | 1.1 | 0 | 0.0028 | 0.0043 | 0.0022 |

The materials used in Table 1 are as follows.
(A) Positive electrode active material
   NCA: LiNi_{0.94}Co_{0.045}Al_{0.015}O₂
   LCO: LiCoO₂
(B) Conductive material
   CNT: carbon nanotube
(C) Binder
   PVdF: polyvinylidene fluoride
   H-XNBR: hydrogenated carboxylated nitrile butadiene rubber binder

### Evaluation Examples

### Evaluation Example 1: Evaluation of viscosity (cP) of Positive Electrode Slurry

The positive electrode slurries according to Examples 1 to 6 and Comparative Examples 1 to 3 were each evaluated with respect to viscosity.

For example, the viscosity was measured at a different shear rate by using a rheometer made by Anton Paar GmBH, and viscosity at a shear rate of 10 (1/s) is shown in Table 2.

For example, the positive electrode slurries were each measured with respect to "initial viscosity', 'viscosity after stirring for 3 days', and 'viscosity after stirring for 7 days'. In addition, the initial viscosity of the positive electrode composition was subtracted from the viscosity after stirring for 7 days to obtain 'a viscosity change after stirring for 7 days', which is shown in Table 2.

In Table 2, 'immeasurable' refers to that the slurry was solidified and had no flowability.

### Evaluation Example 2: Evaluation of Positive Electrode Slurry Powder Resistance

The positive electrode slurries of Examples 1 to 6 and Comparative Examples 1 to 3 were each solidified into powder to measure powder resistance by using a 4-pin resistance meter.

After applying a constant current to two pins at both (e.g., simultaneously) ends of the 4-pin resistance meter to measure a voltage at the other two pins in the middle and thus obtain resistance, the resistance was used with each thickness of the positive electrode and the slurry powder to calculate initial resistance, which is shown in Table 2.

Subsequently, resistance after 7 days thereof also was calculated and then, is shown in Table 2.

Then, the initial resistance was subtracted from the resistance after 7 days, divided by the initial resistance, and multiplied by 100 to obtain a resistance change rate (%), which is shown in Table 2.

### Evaluation Example 3: Evaluation of Bending Strength of Positive Electrode

The positive electrodes according to Examples 1 to 6 and Comparative Examples 1 to 3 were each evaluated with respect to bending strength by using a three-point bending tester and then, shown in Table 2.

**(Table 2)**

| | Viscosity of positive electrode slurry (cP) | | | | Resistance of positive electrode slurry powder (Ωcm) | | | Bending strength of positive electrod e (mN) |
|---|---|---|---|---|---|---|---|---|
| | Initial viscosit y | Viscosit y after stirring for 3 days | Viscosity after stirring for 7 days | Viscosity change after stirring for 7 days | Initial resista nce | Resista nce after 7 days | Resista nce change rate (%) | |
| Ex. 1 | 3105 | 3089 | 2333 | -772.0 | 34.0 | 34.60 | 1.76 | 510 |
| Ex. 2 | 2950 | 3005 | 2835 | -115.0 | 24.8 | 25.10 | 1.21 | 450 |
| Ex. 3 | 2888 | 2732 | 2000 | -888.0 | 32.7 | 33.00 | 0.92 | 525 |
| Ex. 4 | 3060 | 2955 | 2160 | -900.0 | 26.3 | 26.50 | 0.76 | 447 |
| Comp. Ex. 1 | 8811 | 20000 | unmeas urable | 11189 | 32.7 | 67.70 | 107.03 | 630 |
| Comp. Ex. 2 | 6780 | 16560 | unmeas urable | 9780 | 28.3 | 59.80 | 111.31 | 645 |
| Ex. 5 | 2963 | 2739 | 2605 | -358.0 | 22.40 | 21.50 | -4.02 | 368 |
| Ex. 6 | 3000 | 2901 | 2697 | -303.0 | 12.00 | 12.20 | 1.67 | 289 |
| Comp. Ex. 3 | 4898 | 5073 | 4573 | -325.0 | 13.70 | 13.90 | 1.46 | 470 |

Referring to Table 2, the positive electrode compositions (slurries) according to Examples 1 to 4, each of which used NCA, a high-nickel positive electrode active material, having a large amount of a lithium-containing compound, which was residual lithium, when H-XNBR as a binder was applied to such NCA, were confirmed to be suppressed or reduced from gelation and to exhibit small viscosity changes after allowed to stand. In addition, each of the positive electrode slurry powders was also confirmed to exhibit a very small resistance change rate.

In contrast, the positive electrode slurries of Comparative Examples 1 and 2 were each solidified through a reaction of a PVdF binder with residual lithium on the NCA surface and thus exhibited a much larger viscosity change after allowed to stand than those of the examples, and the positive electrode slurry powders thereof also each exhibited a much larger resistance change rate than those of the examples.

In addition, Examples 5 and 6 and Comparative Example 3, each of which used LCO with a very small amount of residual lithium as a positive electrode active material, because there was almost no residual lithium, when H-XNBR (Examples 5 and 6) or PVdF (Comparative Example 3) as a binder was applied, were each confirmed to exhibit equivalently a small viscosity change after allowed to stand. In addition, Examples 5 and 6 and Comparative Example 3 each exhibited equivalently a small resistance change rate.

Referring to Table 2, Comparative Examples 1 and 2 each exhibited very high bending strength of the positive electrode compared to each of Examples 1 to 4, which confirmed significantly deteriorated flexibility. In addition, Comparative Example 3 exhibited very high bending strength of the positive electrode compared to each of Examples 5 and 6, which confirmed significantly deteriorated flexibility. Accordingly, it was confirmed that flexibility of an H-XNBR material itself was superior to that of PVdF.

As used herein, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery (e.g., a dry electrode) manufacturing device, a battery pack, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be practical example embodiments, it is to be understood that the invention is not limited to the disclosed embodiments. In contrast, it is intended to cover one or more suitable modifications and equivalent arrangements included within the spirit and scope of the appended claims and equivalents thereof.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10), comprising
a positive electrode current collector; and
a positive electrode mixture layer on the positive electrode current collector,
wherein the positive electrode mixture layer comprises:
a positive electrode active material; and
a binder comprising a hydrogenated carboxylated nitrile butadiene rubber,
wherein the hydrogenated carboxylated nitrile butadiene rubber comprises, based on a total weight of 100 wt% of the hydrogenated carboxylated nitrile butadiene rubber:
20 wt% to **40** wt% of a first structural unit derived from acrylonitrile and represented by Chemical Formula 1;
30 wt% to 78 wt% of a second structural unit comprising a hydrogenated butadiene-derived structural unit represented by Chemical Formula 2A and a butadiene-derived structural unit represented by Chemical Formula 2B;
2 wt% to 10 wt% of a third structural unit represented by Chemical Formula 3; and
0 wt% to 20 wt% of a fourth structural unit represented by Chemical Formula 4,
wherein the hydrogenated butadiene-derived structural unit represented by Chemical Formula 2A is in an amount of greater than or equal to 90 wt% and less than 100 wt% based on a total amount of 100 wt% of the second structural unit, and
wherein the butadiene-derived structural unit represented by Chemical Formula 2B is in an amount of greater than 0 wt% and less than or equal to 10 wt% based on the total amount of 100 wt% of the second structural unit: 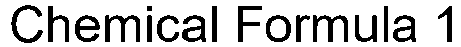 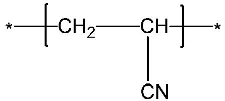 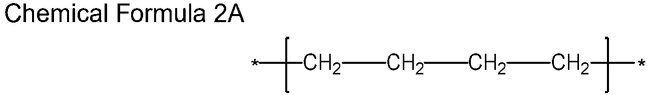 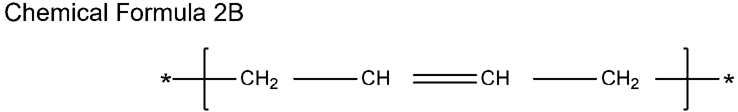 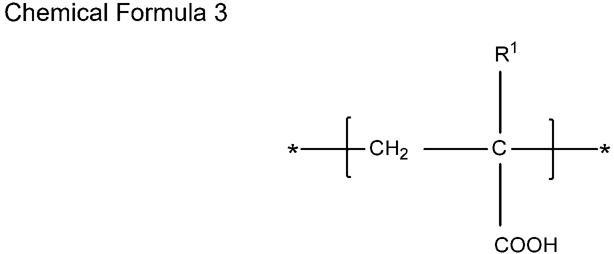 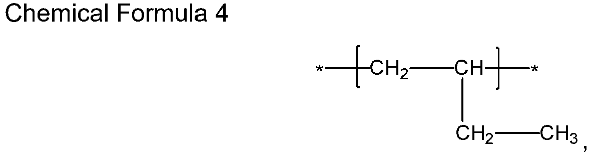
in Chemical Formula 3,
R¹ being hydrogen, a substituted or unsubstituted C1 to C20 alkyl group, an ester group (-COOR, where R is a substituted or unsubstituted C1 to C20 alkyl group), a cyano group (-CN), a pyrrolidonyl group (-C₃H₅NHCO), a carboxyl group (-COOH), a caprolactamyl group (-NCOC₅H₁₀), a morpholinyl group (-NC₄H₈O), a hydroxy group (-OH), an amino group (-NH₂), a vinyl group (-CH=CH₂), an epoxy group (-CHOCH₂), or a thiol group (-SH).

2. The positive electrode (10) as claimed in claim 1, wherein
a weight average molecular weight (Mw) of the binder comprising the hydrogenated carboxylated nitrile butadiene rubber is 50,000 g/mol to 500,000 g/mol.

3. The positive electrode (10) as claimed in claim 1 or 2, wherein,
based on a total weight of 100 wt% of the positive electrode mixture layer,
the binder comprising the hydrogenated carboxylated nitrile butadiene rubber is in an amount of 0.1 wt% to 5 wt%.

4. The positive electrode (10) as claimed in any of the claims 1 to 3, wherein
the positive electrode active material comprises a compound represented by Chemical Formula 5:
Chemical Formula 5 Liₐ₁Niₓ₁M¹_{y1}M²_{z1}O_{2-b1}X_{b1},
in Chemical Formula 5,
0.9≤a1≤1.8, 0.3≤x1≤1, 0≤y1≤0.7, 0≤z1≤0.7, 0.9≤x1+y1+z1≤1.1, and 0≤b1≤0.1,
M¹ and M² being different elements and being each independently at least one element selected from among Al, B, Ba, Ca, Ce, Co, Cr, Cu, Fe, Mg, Mn, Mo, Nb, Si, Sn, Sr, Ti, V, W, Zn, and Zr, and
X being at least one element selected from among F, P, and S.

5. The positive electrode (10) as claimed in any of the claims 1 to 4, wherein
the positive electrode active material comprises a lithium nickel-based composite oxide comprising greater than or equal to 80 mol% of nickel based on a total metal excluding lithium in the lithium nickel-based composite oxide.

6. The positive electrode (10) as claimed in any of the claims 1 to 5, wherein,
based on a total weight of 100 wt% of the positive electrode mixture layer,
the positive electrode active material is in an amount of 90 wt% to 99.5 wt%.

7. The positive electrode (10) as claimed in any of the claims 1 to 6, wherein
the positive electrode mixture layer further comprises a conductive material, preferably based on a total weight of 100 wt% of the positive electrode mixture layer,
the conductive material in an amount of 0.1 wt% to 5 wt%.

8. The positive electrode (10) as claimed in any of the claims 1 to 7, wherein,
based on a total weight of 100 wt% of the positive electrode active material, the binder comprising the hydrogenated carboxylated nitrile butadiene rubber, and the conductive material,
the positive electrode active material is in an amount of 97 wt% to 99.8 wt%.

9. A positive electrode composition, comprising
a positive electrode active material;
a binder comprising a hydrogenated carboxylated nitrile butadiene rubber; and
a solvent,
wherein the hydrogenated carboxylated nitrile butadiene rubber comprises, based on a total weight of 100 wt% of the hydrogenated carboxylated nitrile butadiene rubber:
20 wt% to **40** wt% of a first structural unit derived from acrylonitrile and represented by Chemical Formula 1;
30 wt% to 78 wt% of a second structural unit comprising a hydrogenated butadiene-derived structural unit represented by Chemical Formula 2A and a butadiene-derived structural unit represented by Chemical Formula 2B;
2 wt% to 10 wt% of a third structural unit represented by Chemical Formula 3; and
0 wt% to 20 wt% of a fourth structural unit represented by Chemical Formula 4,
wherein the hydrogenated butadiene-derived structural unit represented by Chemical Formula 2A is in an amount of greater than or equal to 90 wt% and less than 100 wt% based on a total amount of 100 wt% of the second structural unit, and
wherein the butadiene-derived structural unit represented by Chemical Formula 2B is in an amount of greater than 0 wt% and less than or equal to 10 wt% based on the total amount of 100 wt% of the second structural unit: 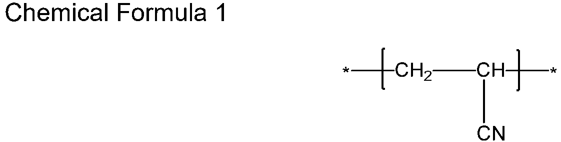 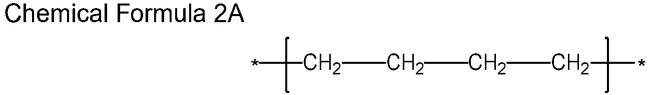 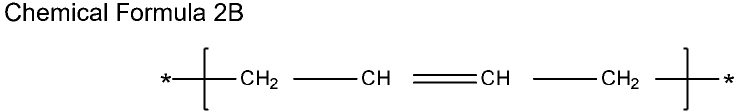 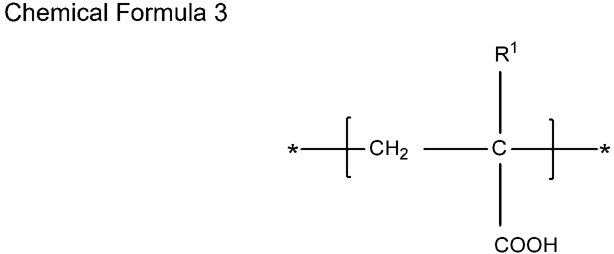 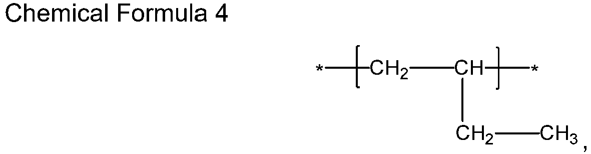
in Chemical Formula 3,
R¹ being hydrogen, a substituted or unsubstituted C1 to C20 alkyl group, an ester group (-COOR, where R is a substituted or unsubstituted C1 to C20 alkyl group), a cyano group (-CN), a pyrrolidonyl group (-C₃H₅NHCO), a carboxyl group (-COOH), a caprolactamyl group (-NCOC₅H₁₀), a morpholinyl group (-NC₄H₈O), a hydroxy group (-OH), an amino group (-NH₂), a vinyl group (-CH=CH₂), an epoxy group (-CHOCH₂), or a thiol group (-SH).

10. The positive electrode composition as claimed in claim 9, wherein
a weight average molecular weight (Mw) of the binder comprising the hydrogenated carboxylated nitrile butadiene rubber is 50,000 g/mol to 500,000 g/mol.

11. The positive electrode composition as claimed in claim 9 or 10, wherein
the positive electrode active material comprises a compound represented by Chemical Formula 5:
Chemical Formula 5 Liₐ₁Niₓ₁M¹_{y1}M²_{z1}O_{2-b1}X_{b1},
in Chemical Formula 5,
0.9≤a1≤1.8, 0.3≤x1≤1, 0≤y1≤0.7, 0≤z1≤0.7, 0.9≤x1+y1+z1≤1.1, and 0≤b1≤0.1,
M¹ and M² being different elements and being each independently at least one element selected from among Al, B, Ba, Ca, Ce, Co, Cr, Cu, Fe, Mg, Mn, Mo, Nb, Si, Sn, Sr, Ti, V, W, Zn, and Zr, and
X being at least one element selected from among F, P, and S.

12. The positive electrode composition as claimed in any of the claims 9 to 11, wherein
the positive electrode active material comprises a lithium nickel-based composite oxide comprising greater than or equal to 80 mol% of nickel based on a total metal excluding lithium in the lithium nickel-based composite oxide.

13. The positive electrode composition as claimed in any of the claims 9 to 12, wherein
the positive electrode composition further comprises a conductive material, whereby preferably, based on a total weight of 100 wt% of the positive electrode active material, the binder, and the conductive material, the positive electrode active material is in an amount of 97 wt% to 99.8 wt%,
the binder is in an amount of 0.1 wt% to 2 wt%, and the conductive material is in an amount of 0.1 wt% to 1 wt%.

14. The positive electrode composition as claimed in any of the claims 9 to 13, wherein
the positive electrode composition further comprises a lithium-containing compound present on a surface of the positive electrode active material, and
wherein the lithium-containing compound comprises LiOH, Li₂CO₃, free Li, or a combination thereof, wherein preferably,
based on a total weight of 100 wt% of the positive electrode active material,
the LiOH is in an amount of 0.002 wt% to 0.6 wt%,
the Li₂CO₃ is in an amount of 0.004 wt% to 0.4 wt%, and
the free Li is in an amount of 0.002 wt% to 0.3 wt%.

15. A rechargeable lithium battery (100), comprising
the positive electrode (10) as claimed in any of the claims 1 to 8;
a negative electrode (20) comprising a negative electrode active material; and
an electrolyte.
